# EUROPÄISCHE PATENTSCHRIFT

(11) **EP 0 359 024 B1**
(45) Veröffentlichungstag und Bekanntmachung des Hinweises auf die Patenterteilung: **24.11.1993**
(21) Anmeldenummer: 89115929.5
(22) Anmeldetag: 29.08.1989
(51) Int. Cl.: F16H 55/36, F16H 55/38, B65G 39/07

(54) **Befestigungsausbildung eines Trommmelbelags**
Mounting of a pulley lagging
Montage de revêtement de poulie

(30) Priorität: 08.09.1988 DE 3830556
(43) Veröffentlichungstag der Anmeldung: 21.03.1990
(73) Patentinhaber: INDUSTRIETECHNIK KALENBORN GMBH, D-53560 Vettelschoss (DE)
(72) Erfinder: Stocksiefen, Peter, D-5464 Asbach/Ww. (DE)
(74) Vertreter: Lewald, Dietrich, Dipl.-Ing.

(56) Entgegenhaltungen:
- DE-A- 1 575 492
- FR-A- 2 178 542
- US-A- 4 284 409

## Beschreibung

Die Erfindung betrifft eine Befestgigungsausbildung eines Trommelbelags oder weiterer zum Aufspannen geeigneter Beläge gemäß dem Oberbegriff des Patentanspruchs 1.

Eine solche Ausbildung ist bekannt aus der FR-A-2 178 542.

Ein solcher Trommelbelag besteht aus einzelnen Segmenten, die in Schienen geführt werden. Diese werden dann mit dem Trommelkörper lösbar bzw. formschlüssig verbunden. Unter Trommeln sind allgemein Walzen oder dergleichen mit einer glatten Oberfläche zu verstehen. Unter Segmenten sind in axialer Richtung über die gesamte Grundkörperlänge der Trommel gelagerte Metall-Gummisegmente, die mit einem zugfähigen Material versehen sein können, zu verstehen. Es ist möglich, daß die Metall-Gummisegmente aus der Trommel oder dergleichen angepaßtem Metallblech bestehen, auf dem eine Gummispezialmischung hoher Haftreibung, die beispielsweise kreuzartig eingeschnittene Kanäle trägt, vorgesehen ist.

Um griffige Funktionsflächen zu erzielen, ist gemäß der FR-A-2 178 542 oder der DE-C-1 575 492 eine Antriebstrommel mit mehreren haftfähigen Streifen versehen. Die Griffleistenbefestigung erfolgt dabei über T-förmige Führungs- und Halteleisten, die sich über die gesamte Grundkörperlänge erstrecken. Bei Abnützung müssen die segmente aus ihren Schienen über die gesamte Grundkörperlänge gezogen werden. Es ist also notwendig, daß ein freier Raum mindestens von der Länge der Segmente zur Verfügung steht.

Ist die Antriebstrommel oder dergleichen in einem festen Rahmen eingebettet, dann kann aus Platzgründen ein Wechsel der Segmente in eingebautem Zustand in manchen Fällen unmöglich werden, was einen beachtlichen Nachteil bedeutet.

Unter extremen Bedingungen, insbesondere aber auch bei langer Betriebszeit der Antriebstrommel oder Umlenktrommeln kann es vorkommen, daß z.B. in Feuchtbretrieben die Segmente sich schlecht oder überhaupt nicht auswechseln lassen.

Der Erfindung liegt die Aufgabe zugrunde, Segmente und Schienen an solchen Antriebs- oder Umlenktrommeln so zu gestalten, daß sie auch beim Einsatz unter schwierigsten Bedingungen vor Ort sich relativ leicht auswechseln lassen.

Erreicht wird die überraschend einfach durch die Maßnahmen des Kennzeichens des Anspruchs 1.

Hierdurch wird erreicht, daß beim Segmentwechsel nur eine Verschiebung des Segments gegenüber der Trägerschiene um die Teilung des Mauerkronen- oder Mauerzackenprofils (Rechteckprofil) zu erfolgen braucht. Das Segment kann dann entnommen werden. In gleicher Weise kann ein neues Segment eingesetzt werden. Auch bis zur endgültigen Befestigung braucht also eine Verschiebung nur um die Teilung des Mauerkronenprofils erfolgen.

Vorzugsweise Ausführungsformen der Erfindung sind in den abhängigen Ausprüchen gekennzeichnet.

Die Erfindung ist nicht auf diese spezielle Rechteckprofilausbildung beschränkt. Es genügt, daß die Stahlhalteschiene von abwechselnd vorspringenden und rückspringenden Bereichen an wenigstens einem ihrer seitlichen Ränder eingefaßt ist und die Halteränder der Gummi-Metallsegmente mit einem ebensolchen nach Einschieben von der Stahlschiene überlagerten Profil ausgebildet sind. Es kann sich auch um eine polygone Ausbildung der Schienen- und Metallsegmentränder handeln. Es ist sogar möglich, daß ein ungewöhnliches Profil, beispielsweise ein Dreiecksprofil bei starken Inkrustierungen, wenn es den Zwecken der Sache nur dient, verwendet wird. Profile mit gerundeten Ecken sowie ein abgerundetes Sägezahnprofil sind ebenfalls möglich.

Vorzugsweise ist zum Einschieben der Gummimetallsegmente (Beläge) das Segment um einen Mauerkronenzacken parallel verschiebbar ausgebildet.

Zweckmäßig sind die inneren Ecken der Rücksprünge gegen die Stahlschienenachse vertieft ausgekehlt.

Günstig ist es, wenn die Stahlschiene beidseitig solche Vor- und Rücksprünge trägt.

Im wesentlichen wird die Länge der Vor- und Rücksprünge gleich sein.

In besonders vorteilhafter Weise beträgt die Teilungslänge jeweils 35 mm, d.h. Mauerzackenvorsprung und Mauerzackenrücksprung in den sich gegenüberstehenden Profilen sind gleich lang.

Vorzugsweise sind die in Kontakt mit der Halteschiene kommenden Teile der Segmente mit einem gleitfreudigen Material beschichtet.

Die Segmente können als Schablonen ausgebildet sein, derart, daß sie die Befestigungsschienen zur Aufnahme der Segmente in axialer Richtung justieren.

Die Mauerkronenvorsprünge der unter die Halteschienen schiebbaren Segmente laufen axial, d.h. in Einschiebrichtung verjüngt. Hierdurch wird erreicht, daß sich die Segmentprofilleiste leichter unter die Halteschiene schieben läßt.

Das Gummimetallprofil kann aus korrosionshemmendem Metallblech, von insbesondere 2 bis 3 mm Dicke mit aufvulkanisiertem Kreuzgeschnittenem Spezialgummi bestehen.

Das Seitenrand-Mauerkronenprofil kann ausgestanzt, ausgefräst oder bei der Herstellung bereits vorgeformt sein.

Die Befestigung gegen Herausrutschen kann durch Hochbiegen eines Mauerzackenvorsprungs gegeben sein. Andere Möglichkeiten sind stirnseitiges Hochbiegen (am Ende der Profile) oder durch jeweils stirnseitig aufgeschobene und befestigte Reifen, die das dann vorstehende Trägerblech der Gummimetallsegmente übergreifen.

Durch die Maßnahme nach der Erfindung wird das Wechseln in der Praxis äußerst einfach: bedingt durch aushärtende Fördergutablagerungen wie z.B. Zement, Kalk oder Gips und Korrosionsbildung zwischen Segmenten und Schienen ist es nunmehr erforderlich, die Segmente um die beispielsweise 35 mm freizuschlagen oder freizubekommen. Ein weiterer Verschiebungsweg fällt fort. Die im Abstand von ca. 35 mm ausgesparten Segmente werden also nur um diese 35 mm verschoben und können dann entnommen werden. In gleicher Weise kann ein neues Segment eingesetzt werden. Die axiale Verschiebung der Segmente kann dadurch noch begünstigt werden, daß man den verbleibenden Abschnitt mit dem gleitfreudigen Mittel beschichtet.

Das Auswechseln der Segmente kann also auch bei extremen Einsatzbedingungen und bei geringen Platzverhältnissen vorgenommen werden. Das Auswechseln der Beläge kann jetzt beispielsweise auch im eingebauten Zustand der Trommel erfolgen.

Die ausgesparten Segmente können gleichzeitig als Schablone dienen, um die Befestigungsschienen zur Aufnahme der Segmente in axialer Richtung zu justieren.

Die Maßnahme nach der Erfindung läßt sich auf jede Art von Trommel, auch wenn diese beispielsweis als Kupplungstrommel oval ausgebildet ist, anwenden. Andere Muster als das erwähnte geschnittene Rautenmuster sind möglich.

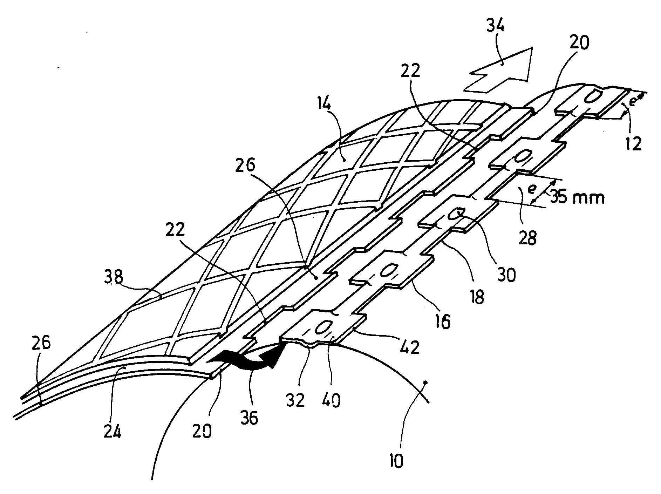

Eine beispielsweise Ausführungsform der Erfindung soll nun mit bezug auf die beiliegende Zeichnung näher erläutert werden. Auf die Trommel 10 wird eine Halteschiene 12 aufgeschweißt, unter die später das Segment 14 geschoben wird. Die Halteschiene wird genau bezüglich der Trommel justiert und dann an den Löchern 30 in der Halteschiene geheftet. Die Halteschiene besitzt bei dieser Ausführungsform beidseitig Mauerkronenprofil mit Rücksprüngen oder Aussparungen 18 und Vorsprüngen 16. In den Ecken der Rücksprünge 18 können sich gegen die Achse der Schiene 12 gerichtete Auskehlungen befinden. Die Stahlschiene hat T-Profil, d.h. sie ist in der Mitte mit einem eingebogenen Stegteil 32 und nach außen aufgewölbten Flügelteilen 40 versehen. Die Flügelteile können an ihrem außen liegenden Ende 42 wieder nach unten gekrümmt sein, um eine bessere Haltefunktion zu ergeben.

Es ist eine doppelseitige Halteschiene dargestellt. Es sind aber aus Kompensationsgründen auch einseitige Halteschienen möglich.

Eine beispielsweise Ausführungsform des Metall-Gummisegments ist bei 14 gezeigt. Ein beispielsweise 2 bis 3 mm dickes Metallblech 24, das relativ korrosionshemmend, gegebenenfalls korrosionsfest ist, ist der Form der Walze folgend vorgewölbt. Auf diesem vorgewölbten und bereits ausgestanzten Segment ist die erforderliche Lage eines speziellen gummiartigen Materials aufvulkanisiert. Im dargestellten Beispiel hat das gummiartige Material rautenförmige Einschnitte 38. Das Mauerkronenprofil ist praktisch identisch dem der Stahlschiene, unter die es dann zu liegen kommt. Zu beiden Seiten des Segments verlaufen diese seitlichen Halteränder 26. Es ist auch möglich, daß das Metallblech bei 24 zu beiden Enden stirnseitig vorsteht, insbesondere dann, wenn nicht die übliche Form der Befestigung sondern die durch stirnseitig aufzuschiebende Reifen erfolgt.

Das Mauerkronenprofil ist bei 22 zu sehen. Ein solches hergestelltes Segment wird unter die Stahlschiene 12 geschoben, wie die Pfeile (34 ziehen) und (36 schieben bzw. Ort des Einschiebens) deutlich machen.

Die Länge der Teilung beträgt jeweils 35 mm, und zwar sowohl für die dargestellte Aussparung 18 wie für die Vorsprünge, wie bei 16 zu sehen.

Die Stahlschiene setzt sich also "hammerkopfförmig" fort. In jedem Hammerkopf befindet sich das oben erwähnte Schweißloch 30. Nach Justierung und Einsetzen der Segmente erfolgt die endgültige Verschweissung.

## Patentansprüche

1. Befestigungsausbildung eines Trommesbelags (14) oder weiterer zum Aufspannen geeigneter Beläge, insbesondere für Förderbandantriebe und andere hochbeanspruchte Beläge, die segmentweise unter an der Trommel (10) feste Stahlhalteschienen (12) schiebbar mit Stahlschienen (12), unter die die Beläge (14) geschoben werden, mit einem Profil mit abwechselnd vorspringenden und rückspringenden Bereichen (16; 18) an wenigstens einem ihrer seitlichen Ränder, dadurch **gekennzeichnet,** daß die seitlichen Halteränder der Trommelbeläge (14) mit einem ebensolchen Profil wie die Stahlhalteschienen (12) ausgebildet sind, die nach Einschieben vom Profil der Stahlhalteschienen (12) überlagert sind.

2. Befestigungsausbildung nach Anspruch 1, dadurch **gekennzeichnet,** daß die als Gummimetallsegmente (14) ausgebildeten Beläge über seitliche Halteränder (26) verfügen, die beidseitig mit Mauerkronenprofil (Rechteckprofil) (16; 18) versehen sind, wobei die Stahlschienen (12) mit einem ebensolchen, nach Einschieben der Segmente (14) das Mauerkronenprofil der Segmente (14) überlagernden Profil ausgebildet sind.

3. Befestigungsausbildung nach einem der vorhergeheneden Ansprüche, dadurch **gekennzeichnet,** daß zum Einschieben der Gummi-Metallsegmente (14) (Beläge) das Segment um die Länge eines Mauerkronenzackens (28) parallel zur Trommel (10) verschiebbar ausgebildet ist.

4. Ausbildung nach Anspruch 3, dadurch **gkennzeichnet,** daß die inneren Winkelecken der Rücksprünge (18) gegen die Stahlschienenachse vertieft ausgekehlt sind.

5. Befestigungsausbildung nach einem der vorhergehenden Ansprüche, dadurch gekennzeichnet, daß die Länge der Vor- und Rücksprünge (16; 18) der Stahlhalteschiene (12) jeweils 35 mm beträgt.

6. Befestigungsausbildung nach einem der vorhergehenden Ansprüche, dadurch gekennzeichnet, daß die in Kontakt mit der Halteschiene (12) kommenden Teile der Segmente (14) mit einem gleitfreudigen Material beschichtet sind.

7. Befestigungsausbildung nach einem der vorhergehenden Ansprüche, dadurch gekennzeichnet, daß die Segmente (14) als Schablone ausgebildet sind, derart, daß sie die Befestigungsschienen (12) zur Aufnahme der Segmente (14) in axialer Richtung justieren.

8. Befestigungsausbildung nach einem der vorhergehenden Ansprüche, dadurch gekennzeichnet, daß die Mauerkronenvorsprünge der unter die Halteschienen (12) schiebbaren Segmente (14) axial, d.h. in Einschiebrichtung verjüngt zulaufen.

9. Befestigungsausbildung nach einem der vorhergehenden Ansprüche, dadurch gekennzeichnet, daß die Sicherung gegen Herausrutschen durch Hochbiegen eines Mauerzackenvorsprungs oder durch stirnseitiges Hochbiegen eines endseitigen Profils gegeben ist.

10. Befestigungsausbildung nach einem der Ansprüche 1 bis 8, dadurch gekennzeichnet, daß die Sicherung gegen Herausrutschen durch stirnseitig jeweils aufgeschobene mit Form und Reibschluß sitzende Reife gegeben ist.

## Claims

1. A fastening design for a drum covering (14) or for other coverings suitable for clamping, in particular for conveyor belt drives and other highly stressed coverings, which are able to be pushed segment by segment under steel holding rails (12) fixed to the drum (10), having steel rails (12) under which the coverings (14) are pushed, having a profile with alternately projecting and recessed regions (16;18) on at least one of their lateral edges, characterised in that the lateral holding edges of the drum coverings (14) are formed with a profile like that of the steel holding rails (12) and when pushed in are covered by the profile of the steel holding rails (12).

2. A fastening design according to claim 1, characterised in that the coverings formed as rubber-metal segments (14) have lateral holding edges (26) which are provided on both sides with a wall crown profile (rectangular profile) (16;18), the steel rails (12) being formed with just such a profile which covers the wall crown profile of the segments (14) when the segments (14) have been pushed in.

3. A fastening design according to either one of the preceding claims, characterised in that for the purpose of pushing in the rubber-metal segments (14) (coverings), the segment is formed so as to be displaceable parallel to the drum (10) by the length of a wall crown indentation (28).

4. A design according to claim 3, characterised in that the inner corners of the recesses (18) are recessed so as to be deepened towards the axis of the steel rails.

5. A fastening design according to any one of the preceding claims, characterised in that the length of the projections and recesses (16;18) of the steel holding rails (12) is in each case 35 mm.

6. A fastening design according to any one of the preceding claims, characterised in that the parts of the segments (14) coming into contact with the holding rail (12) are coated with a material having good sliding properties.

7. A fastening design according to any one of the preceding claims, characterised in that the segments (14) are formed as a template in such a way that they adjust the fastening rails (12) in the axial direction for receiving the segments (14).

8. A fastening design according to any one of the preceding claims, characterised in that the wall crown projections of the segments (14) which can be pushed under the holding rails (12) taper axially, i.e. in the direction of insertion.

9. A fastening design according to any one of the preceding claims, characterised in that protection against slipping out is provided by bending up a wall tooth projection or by bending up the front end of an end profile.

10. A fastening design according to any one of claims 1 to 8, characterised in that protection against slipping out is provided by positively and frictionally engaged collars in each case pushed onto the front end.

## Revendications

1. Système de fixation d'une garniture de tambour (14) ou d'autres garnitures pouvant être serrées en place, notamment pour des systèmes d'entraînement de bandes transporteuses et d'autres garnitures soumises à des contraintes élevées, qui peuvent coulisser par segments en-dessous de rails de retenue en acier (12) solidaires du tambour (10), comportant des rails en acier (12) en-dessous desquels sont insérées les garnitures (14), ainsi qu'un profil comportant en alternance des zones en saillie et en retrait (16, 18) au moins sur l'un de leurs bords latéraux, caractérisé en ce que les bords de retenue latéraux des garnitures de tambour (14) sont conçus avec un profil identique à celui des rails de retenue en acier (12) auxquels, après insertion, est superposé le profil des rails de retenue en acier.

2. Système de fixation selon la revendication 1, caractérisé en ce que les garnitures conçues comme des segments métal-caoutchouc (14) disposent de bords de retenue latéraux (26), qui sont pourvus sur les deux côtés d'un profil crénelé (profil rectangulaire) (16, 18), les rails en acier (12) présentant un profil identique, qui, après insertion des segments (14), se superposent au profil crénelé des segments (14).

3. Système de fixation selon l'une des revendications précédentes, caractérisé en ce que, pour insérer les segments métal-caoutchouc (14) (garnitures), le segment est conçu de façon à pouvoir coulisser parallèlement au tambour (10), sur une longueur égale à celle d'une dent (28) du profil crénelé.

4. Système de fixation selon la revendication 3, caractérisé en ce que les angles intérieurs des retraits (18) sont cannelés, en renfoncement par rapport à l'axe des rails en acier.

5. Système de fixation selon l'une des revendications précédentes, caractérisé en ce que la longueur des saillies et des retraits (16 ; 18) des rails de retenue en acier (12) est de 35 mm.

6. Système de fixation selon l'une des revendications précédentes, caractérisé en ce que les parties des segments (14) entrant en contact avec le rail de retenue (12) sont revêtus d'un matériau facilitant le glissement.

7. Système de fixation selon l'une des revendications précédentes, caractérisé en ce que les segments (14) sont conçus comme un calibre, de façon à ajuster dans la direction axiale les rails de fixation (12) pour permettre le logement des segments (14).

8. Système de fixation selon l'une des revendications précédentes, caractérisé en ce que les saillies crénelées des segments (14) pouvant coulisser en-dessous des rails de retenue (12) ont un profil qui se rétrécit dans le sens axial, c'est-à-dire dans la direction de l'insertion.

9. Système de fixation selon l'une des revendications précédentes, caractérisé en ce que la sécurité contre une sortie par glissement est assurée par un relevage d'une saillie crénelée, ou par relevage, côté frontal, d'un profit en bout.

10. Système de fixation selon l'une des revendications 1 à 8, caractérisé en ce que la sécurité contre une sortie par glissement est assurée par des viroles emmanchées, côté frontal, logées en place par une liaison avec correspondance de forme et par frottement.
